(19) Europäisches Patentamt
European Patent Office
Office européen des brevets

(11) Publication number: **0 420 449 B1**

# EUROPEAN PATENT SPECIFICATION

(45) Date of publication of patent specification: **15.11.95**  (51) Int. Cl.⁶: **C08L 15/00**, C08K 5/09, B60C 27/00

(21) Application number: **90309963.8**

(22) Date of filing: **12.09.90**

(54) Rubber compositions for tire anti-slide devices and anti-slide devices for tires.

(30) Priority: **18.09.89 JP 241146/89**
**23.08.90 JP 222009/90**

(43) Date of publication of application:
**03.04.91 Bulletin 91/14**

(45) Publication of the grant of the patent:
**15.11.95 Bulletin 95/46**

(84) Designated Contracting States:
**AT CH DE FR IT LI SE**

(56) References cited:
**EP-A- 0 139 043**
**EP-A- 0 319 320**
**DE-A- 3 918 928**
**US-A- 4 191 671**

**DATABASE WPIL, no. 90-027326 [04], Derwent Publications Ltd, London, GB; & JP-A-1 306 443**

(73) Proprietor: **NIPPON ZEON CO., LTD.**
**6-1, 2-chome, Marunouchi,**
**Chiyoda-ku**
**Tokyo (JP)**

(72) Inventor: **Saito, Yoshiomi**
**13-1, Misora 1-chome**
**Yotsukaido-shi,**
**Chiba-ken (JP)**

(74) Representative: **Perry, Robert Edward et al**
**GILL JENNINGS & EVERY**
**Broadgate House**
**7 Eldon Street**
**London EC2M 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

FIELD OF THE INVENTION

The present invention relates to rubber compositions having high strength and modulus of elasticity and excellent durability, high-load resistance, colorability and other properties and also to tire anti-slide devices using the rubber compositions.

BACKGROUND OF THE INVENTION

Anti-slide devices such as metallic chains are used to prevent slipping of automotive tires on road surfaces such as snow-covered road surfaces, frozen or icy road surfaces or muddy roads. To avoid noises and damages to road surfaces, tire anti-slide devices using a polymer material such as rubber or plastics have been developed as substitutes for metallic chains in recent years.

Such non-metallic tire anti-slide devices are known to include those having various structures such as ladder structures and net structures. As polymer materials, are employed rubbers such as natural rubber (NR), styrene-butadiene copolymer rubbers (SBR) and polybutadiene rubber (BR), and polyurethanes.

Incidentally, a polymer material for tire anti-slide devices is required to be able to provide tire anti-slide devices excellent in running performance, controllability, riding comfort, mounting/dismounting convenience and the like. As tire anti-slide devices are used under severe conditions, the polymer material is also required to have various excellent physical properties such as durability, strength characteristics (especially, strength characteristics at low temperatures), abrasion resistance, modulus of elasticity and heat generation tendency. The polymer material is also required to permit easy molding and to have good colorability.

However, the conventional rubbers are generally accompanied by the drawback that they are inferior in strength characteristics and durability and cannot withstand high load. In addition, to be resistant to possible dropping or destruction through deformation under centrifugal force applied during rotation of a tire, a tire anti-slide device must have a high modulus of elasticity. If these rubbers are formed with a high modulus of elasticity, their molding will become difficult and their strength will be reduced considerably.

In order to obtain a tire anti-slide device which is made of rubber and is excellent in both strength and performance, it is therefore the common practice that the rubber is not molded and cured alone but is molded and cured together with a core material such as a steel cord, a nylon net or polyester fibers embedded therein. It is however very difficult and moreover laborious to mold and cure with such a core material centrally embedded in the rubber, because a tire anti-slide device usually has a complicated beltlike structure such as a ladder- or net-like structure.

With a view toward providing a process for the efficient production of a tire anti-slide device made of a rubber and using a core material, a variety of proposals has been made to date (for example, Japanese Patent Application Laid-Open Nos. 11040/1982, 148250/1987, 231714/1987, 3940/1988 and 37906/1988). These processes however still require a lot of labor and, moreover, cannot achieve sufficient effects for the improvement of the moldability.

Another process is proposed in Japanese Patent Application Laid-Open No. 205807/1987, in which, in order to obtain a tire anti-slide device made of rubber and having a high modulus of elasticity without using any core material, a rubber composition with short fibers mixed, dispersed and oriented in natural rubber or a styrene-butadiene copolymer rubber is molded and cured into a network-patterned rubber belt. This process however cannot avoid strength reduction.

On the other hand, tire anti-slide devices using polyurethane do not require any core material, but are accompanied by the problem that they are softened and broken due to generation of heat during running.

OBJECTS AND SUMMARY OF THE INVENTION

An object of the present invention is to provide a tire anti-slide device which is made of rubber, is equipped with high strength and modulus of elasticity and is excellent in durability, high-load resistance, colorability and the like and also to furnish a rubber composition for tire anti-slide devices.

Another object of the present invention is to provide, with good moldability, an anti-slide device for tires, said device being excellent in strength characteristics, modulus of elasticity, durability and the like, without the need for a core material.

The present inventors have carried out an extensive investigation with a view toward overcoming the above-described problems of the conventional art. As a result, it has been found that a tire anti-slide device having various meritorious characteristics - such as high strength and modulus of elasticity, excellent durability and high-load resistance and free colorability without impairment of physical properties - can be provided from a vulcanizable rubber composition which contains an ethylenically-unsaturated nitrile-conjugated diene copolymer rubber having a conjugated diene unit content in the polymer chain of not more than 30 wt.%, zinc methacrylate and an organic peroxide.

When a running test was conducted by mounting the tire anti-slide device on each automotive tire, the device demonstrated superb durability without damages even after 5,000 km running. Good moldability can also be enjoyed since the rubber composition can show the above-described various characteristics without any core material.

It is to be noted that incorporation of any metal salt of any ethylenically-unsaturated carboxylic acid other than zinc methacrylate failed to provide any satisfactory tire anti-slide device.

The present invention has been brought to completion on the basis of these findings.

In one aspect of the present invention, there is thus provided a rubber composition for tire anti-slide devices, comprising:

100 parts by weight of a copolymer rubber derived at least from an ethylenically-unsaturated nitrile and a conjugated diene and having a conjugated diene unit content in the polymer chain of not more than 30 wt.%;

10-100 parts by weight of zinc methacrylate in the form of particles of which no more than 5 wt.% is 20 $\mu$m or more in size; and

0.2-10 parts by weight of an organic peroxide.

In another aspect of the present invention, there is also provided a tire anti-slide device produced by molding and curing the rubber composition.


DETAILED DESCRIPTION OF THE INVENTION

Features of the present invention will hereinafter be described.


(Copolymer rubber)

The present invention uses, as a polymer material, a copolymer rubber derived at least from an ethylenically-unsaturated nitrile and a conjugated diene and having a conjugated diene unit content in the polymer chain of not more than 30 wt.%. The copolymer rubber will hereinafter be abbreviated as the "ethylenically-unsaturated nitrile-conjugated diene high-saturation copolymer rubber".

The ethylenically-unsaturated nitrile-conjugated diene high-saturation copolymer rubber useful in the practice of the present invention can be a copolymer rubber resulting from hydrogenation of conjugated diene units of a copolymer rubber derived from an ethylenically-unsaturated nitrile such as acrylonitrile or methacrylonitrile and a conjugated diene such as 1,3-butadiene, isoprene or 1,3-pentadiene; or a multicomponent copolymer rubber of the above-described two types of monomers with at least one copolymerizable monomer, for example, one or more of aromatic vinyl compounds, unsaturated carboxylic acids, alkyl esters of unsaturated carboxylic acids, alkoxyalkyl esters of unsaturated carboxylic acids, and fluoroalkyl esters of unsaturated carboxylic acids, or a copolymer rubber resulting from hydrogenation of unsaturated diene units of the above multicomponent copolymer rubber.

Specific examples include acrylonitrile-butadiene copolymer rubbers, acrylonitrile-butadiene-isoprene copolymer rubbers, acrylonitrile-isoprene copolymer rubbers, acrylonitrile-butadiene-acrylate copolymer rubbers, acrylonitrile-butadiene-acrylic acid copolymer rubbers and acrylonitrile-butadiene-acrylate-methacrylate copolymer rubbers and copolymer rubbers resulting from hydrogenation of the above copolymer rubbers. These copolymer rubbers can be used either singly or in combination.

These copolymer rubbers contain ethylenically-unsaturated nitrile units in a proportion of 20-60 wt.% in the polymer chain. Conjugated diene units have been controlled to 30 wt.% or less by partial hydrogenation or like means.

If the content of ethylenically-unsaturated nitrile unit is smaller than 20 wt.%, the resulting copolymer rubber will have inferior oil resistance. On the other hand, contents greater than 60 wt.% will result in copolymer rubbers having reduced flexibility. Conjugated diene unit contents greater than 30 wt.% make it impossible to achieve any significant improvement in tensile strength. Preferably, the conjugated diene unit content may range from 0 wt.% to 20 wt.%.

(Zinc methacrylate)

Zinc methacrylate usable in the present invention can be obtained by reacting a zinc compound such as zinc oxide, zinc carbonate or zinc hydroxide with methacrylic acid by a method known *per se* in the art. Zinc methacrylate is desirably that obtained by reacting methacrylic acid and a zinc compound at a molar ration in a range of from 1:0.5 to 1:3.2, preferably from 1:0.5 to 1:2.5. The molar ratio of methacrylic acid to the zinc compound is the value calculated on the basis of the molecular weight of methacrylic acid and the formula weight of the zinc compound.

The proportion of zinc methacrylate is 10-100 parts by weight per 100 parts by weight of the copolymer rubber. If this proportion is smaller than 10 parts by weight or greater than 100 parts by weight, the improving effect for tensile strength will be reduced. The preferable proportion of zinc methacrylate can be 20-90 parts by weight, with 30-80 parts by weight being particularly preferred.

It is desirable that zinc methacrylate is a reaction product of methacrylic acid and a zinc compound at a molar ratio in a range of from 1:0.5 to 1:3.2 and is added in a proportion sufficient to give a methacrylic acid content (i.e., the amount of bound methacrylic acid in the reaction product) of 15-50 parts by weight, more preferably 20-40 parts by weight per 100 parts by weight of the copolymer rubber. If the methacrylic acid content is unduly low, the resulting vulcanizate will have insufficient 100% tensile stress and, when used as a tire anti-slide device, the device will be deformed by centrifugal force and will be susceptible to damages.

Desirably, zinc methacrylate is that obtained by removing coarse particles, namely, that obtained by controlling the content of coarse particles of 20 $\mu$m or greater to not higher than 5 wt.%, most preferably to 0 wt.% by classifying it in accordance with air classification or the like, so that zinc methacrylate can be highly dispersed in the copolymer rubber to improve its tensile strength.

Zinc methacrylate can also be produced by adding methacrylic acid and a zinc compound to the copolymer rubber and reacting them in the copolymer rubber, namely, *in situ*. In this case, it is preferable to use, as the zinc compound, a zinc compound in which the content of coarse particles of 20 $\mu$m or greater has been lowered to 5 wt.% or less by substantially removing such coarse particles through classification. The zinc compound employed here may be zinc oxide, zinc carbonate, zinc hydroxide or the like. It can be added usually in a proportion of 5-80 parts by weight, preferably 10-60 parts by weight per 100 parts by weight of the copolymer rubber. On the other hand, methacrylic acid can be added usually in a proportion of 10-50 parts by weight, preferably 15-50 parts by weight, more preferably 20-40 parts by weight per 100 parts by weight of the rubber. If methacrylic acid is added too little, the resulting vulcanizate will have a lowered 100% tensile stress. Such small proportions are therefore not preferred. The molar ratio of methacrylic acid to the zinc compound may range from 1:0.5 to 1:3.2, preferably from 1:0.5 to 1:2.5.

(Organic peroxide)

No particular limitation is imposed on the organic peroxide to be used in the present invention as long as it is usable for the peroxide curing of usual rubber.

Specific examples of such organic peroxides include dicumyl peroxide, di-t-butyl peroxide, t-butylcumyl peroxide, benzoyl peroxide, 2,5-dimethyl-2,5-(t-butylperoxy)hexene-3,2,5-dimethyl-2,5-di(benzoyl-peroxy)hexane, 2,5-dimethyl-2,5-mono(t-butylperoxy)hexane, and $\alpha,\alpha$-bis(t-butylperoxy-m-isopropyl)benzene.

These organic peroxides can be used either singly or in combination. They are added usually in a proportion of 0.2-10 parts by weight, preferably 0.5-8 parts by weight, notably 1-6 parts by weight per 100 parts of the rubber. It is desirable to determine the optimum proportion of the organic peroxide in accordance with physical property values required.

(Rubber composition)

The rubber composition of the present invention contains the organic peroxide and is a vulcanizable rubber composition.

The rubber composition can be prepared in any manner as long as good dispersion can be achieved for zinc methacrylate or for methacrylic acid and a zinc compound. They are generally mixed by rolls, a Banbury mixer or a kneader, which is widely employed in the rubber industry.

Regarding the mixing order of the individual components, it is preferable to add the organic peroxide after mixing the copolymer rubber and zinc methacrylate into a fully-dispersed mass in advance; or to have methacrylic acid mixed or absorbed after adding and mixing the zinc compound with the copolymer rubber in advance, and then to add the organic peroxide, followed by mixing into a homogeneous mass.

The vulcanizable rubber composition of the present invention can be added, as needed, with one or more of various additives employed usually in the rubber industry, for example, reinforcing materials such as carbon black and silica, fillers such as calcium carbonate and talc, crosslinking aids such as triallyl isocyanurate, trimethylolpropane triacrylate and m-phenylene bismaleimide, plasticizers, stabilizers, curing aids, and colorants.

In view of the application as tire anti-slide devices, the rubber composition of the present invention may preferably be such that can provide a vulcanizate whose 100% tensile stress is at least 50 kg/cm$^2$. Silica is particularly preferred among the above additives because it can improve the 100% tensile stress of vulcanizates. Since physical properties of the rubber composition of the present invention, such as tensile strength, are not lowered to any substantial extent, the rubber composition of the present invention makes it possible to produce tire anti-slide devices of a desired color.

(Tire anti-slide device)

The rubber composition of the present invention can be formed into tire anti-slide devices of various structures by methods adopted to date, for example, by extruding uncured rubber cords, arranging them in a mold having grooves in the pattern of a ladder or net and then press-curing them.

The tire anti-slide device of the present invention can exhibit sufficient practical performance when press-cured without any core material, although a core material may be used.

Tire anti-slide device obtained using the rubber composition of the present invention were mounted on tires, and a dry-pavement running test conducted. As a result, their abrasion resistance and strength were retained at an extremely good level even after 5,000 km running.

In view of these characteristic features, the anti-slide device of the present invention is suitable as an anti-slide device in a field where excellent high-load resistance is required, for example, as an anti-slide device for a truck/bus tire.

ADVANTAGES OF THE INVENTION

The present invention can provide rubber compositions which are equipped with high strength and modulus of elasticity, are excellent in durability and high-load resistance and have good colorability and easy moldability and also tire anti-slide devices using the rubber compositions.

EMBODIMENTS OF THE INVENTION

The present invention will hereinafter be described more specifically by the following referential examples, examples and comparative examples. All designations of "part" or "parts" in the examples and comparative examples are part or parts by weight.

In each of the examples and comparative examples, the vulcanizable rubber composition was prepared by mixing its components shown in the corresponding table other than the organic peroxide in a kneader and then mixing the organic peroxide in the resulting mass through rolls.

Measuring methods of physical properties and classifying method are as follows:

⟨Tensile strength, elongation, hardness, and 100% tensile stress⟩

These properties were measured following JIS K-6301.

⟨Dynamic heat generation⟩

Measured at 150°C by a Goodrich flexometer.

⟨Picot abrasion⟩

Abrasion wear measured after 80 reciprocations under 4.5 kg load on a Picot abrasion tester in accordance with ASTM D-2228 was expressed in terms of cc.

⟨Classification⟩

Each zinc compound of zinc methacrylate was classified by a classifier ("100MZR", trade name; manufactured by Alpine Co.) under the following conditions:

| | |
|---|---|
| Air quantity: | 42 Nm$^3$/hr |
| Revolution number: | 13,000 rpm |

⟨Particle size distribution⟩

The content (wt.%) of coarse particles of 20 $\mu$m or greater was measured using a particle size distribution analyzer of the centrifugal settling type ("Model SA-CP3", trade name; manufactured by Shimadzu Corporation).

Referential Example 1

(Synthesis of ethylenically unsaturated nitrile-conjugated diene high-saturation copolymer rubber)

An acrylonitrile-butadiene copolymer rubber having a bound acrylonitrile content of 37% (Rubber No. A) was dissolved in methyl isobutyl ketone and then hydrogenated to various degrees by using Pd-carbon catalyst, whereby hydrogenated copolymer rubbers having various conjugated diene unit contents set out in Table 1 (Rubber Nos. B-G) were prepared.

Similarly, an acrylonitrile-butadiene copolymer rubber (hereinafter abbreviated as "NBR") having a bound acrylonitrile content of 45% was hydrogenated to various degrees so that hydrogenated copolymer rubbers given as Rubber Nos. H-J in Table 1 were prepared.

Table 1

| Rubber No. (Composition of copolymer rubber) | A | B | C | D | E | F | G | H | I | J |
|---|---|---|---|---|---|---|---|---|---|---|
| Content of bound acrylonitrile, % | 37 | 37 | 37 | 37 | 37 | 37 | 37 | 45 | 45 | 45 |
| Degree of hydrogenation, % | 0 | 50 | 65 | 80 | 90 | 95 | 97 | 50 | 85 | 95 |
| Content of conjugated diene units, wt.% | 63.0 | 31.5 | 22.1 | 12.6 | 6.3 | 3.2 | 1.5 | 27.5 | 8.3 | 2.8 |

Referential Example 2

(Synthesis of zinc methacrylate)

Zinc oxide was added to toluene, followed by the dropwise addition of methacrylic acid under stirring. Zinc oxide and methacrylic acid were reacted for about 1 hour. After aged for 16 hours, the precipitate was collected by filtration and dried at 80°C under reduced pressure. After the drying, the resultant solid was ground in a mortar and sifted through a 60-mesh screen so that zinc methacrylate, which may hereinafter be abbreviated as "Zn-MA", was obtained. The sifted product was then classified by an air classifier, whereby the content of coarse particles of 20 $\mu$m or greater was reduced to 5 wt.% or less.

The results are summarized in Table 2.

Table 2

| Zn-MA Code Number | No. 1 | | No. 2 | | No. 3 | | No. 4 | |
|---|---|---|---|---|---|---|---|---|
| Zinc oxide[1]), g | 50 | | 100 | | 200 | | 300 | |
| Methacrylic acid, g | 100 | | 100 | | 100 | | 100 | |
| Zinc oxide/methacrylic acid, molar ratio | 0.53 | | 1.06 | | 2.12 | | 3.17 | |
| Classification[2]) | A | N | A | N | A | N | A | N |
| Content of coarse particles of 20 μm and greater, % | 0 | 36 | 0 | 28 | 2 | 45 | 3 | 31 |

1) "Zinc White No. 1" (trade name, product of Seido Chemical Industry Co., Ltd.)
2) A: Applied, N: Not applied.

Example 1

Using the copolymer rubbers (Rubber No. A-G having the bound acrylonitrile content of 37% and the varied hydrogenation degrees as shown in Table 1, vulcanizable rubber compositions were prepared in accordance with the compounding recipes shown in Table 3, respectively. Zinc methacrylate was prepared by reacting methacrylic acid and zinc oxide *in situ* at a molar ratio of 1:1.06 in the copolymer rubbers.

The vulcanizable rubber compositions were separately press-cured under the vulcanization conditions given in Table 2, whereby vulcanized sheets of 2 mm thick were prepared, respectively. Their physical properties were measured in accordance with JIS K-6301, and the results are shown in Table 3.

It is understood from the results of Table 3 that the tensile strength is improved as the content of conjugated diene units in a copolymer rubber becomes lower. It is also understood that the tensile strength is low and the strength is insufficient as a rubber for tire anti-slide devices in the case of a copolymer rubber having a conjugated diene unit content higher than 30 wt.% (Run Nos. 6-7) or when SBR is employed (Run No. 8).

## Table 3

| | | Invention Example | | | | | Comparative Example | | |
|---|---|---|---|---|---|---|---|---|---|
| Run No. | | 1 | 2 | 3 | 4 | 5 | 6 | 7 | 8 |
| Rubber No. | | C | D | E | F | G | A | B | SBR[2] |
| Compounding formulation | Copolymer rubber | 100 | 100 | 100 | 100 | 100 | 100 | 100 | 100 |
| | Zinc oxide[1] | 20 | 20 | 20 | 20 | 20 | 20 | 20 | 20 |
| | Methacrylic acid | 20 | 20 | 20 | 20 | 20 | 20 | 20 | 40 |
| | Organic peroxide[3] | 5 | 5 | 5 | 5 | 5 | 5 | 5 | 0.3 |
| Vulcanization conditions | Temperature, °C | 180 | 180 | 180 | 180 | 180 | 180 | 180 | 180 |
| | Time, minutes | 15 | 15 | 15 | 15 | 15 | 15 | 15 | 15 |
| Measurement data | Tensile strength, kg/cm$^2$ | 497 | 565 | 572 | 580 | 585 | 240 | 310 | 222 |
| | Elongation, % | 420 | 450 | 460 | 470 | 480 | 120 | 210 | 330 |

1) Same as the corresponding footnote to Table 2.
2) "Nipol 1502", trade name for SBR produced by Nippon Zeon Co., Ltd.
3) α,α'-bis(tert-butylperoxy-m-isopropyl)benzene; purity: 40%.

Example 2

Using the copolymer rubbers (Rubber No. H-J) having the bound acrylonitrile content of 45% and the varied hydrogenation degrees as shown in Table 1, vulcanizable rubber compositions were prepared in accordance with the compounding recipes shown in Table 4, respectively. The rubber compositions were separately press-cured under the vulcanization conditions shown in Table 4, and the physical properties of the vulcanizates were measured similarly to Example 1.

The results are summarized in Table 4.

It is understood from the results of Table 4 that each rubber composition of the invention has excellent strength and elongation characteristics and the tensile strength is improved as the content of conjugated diene units in a copolymer rubber becomes lower.

Table 4

|  |  | Invention Example | | |
|---|---|---|---|---|
| Run No. |  | 9 | 10 | 11 |
| Rubber No. |  | H | I | J |
| Compounding recipe | Copolymer rubber | 100 | 100 | 100 |
|  | Zinc oxide[1] | 20 | 20 | 20 |
|  | Methacrylic acid | 20 | 20 | 20 |
|  | Organic peroxide[3] | 5 | 5 | 5 |
| Vulcanization conditions | Temperature, °C | 180 | 180 | 180 |
|  | Time, minutes | 15 | 15 | 15 |
| Measured values | Tensile strength, kg/cm$^2$ | 401 | 578 | 591 |
|  | Elongation, % | 310 | 480 | 510 |

1) Same as the corresponding footnote to Table 2.
3) Same as the corresponding footnote to Table 3.

Example 3

Vulcanizable rubber compositions were prepared by using the hydrogenated NBR (Rubber No. E) shown in Table 1 and varying the amounts of zinc oxide and methacrylic acid in various ways as described in Table 5. The rubber compositions were separately press-cured under the vulcanization conditions given in Table 5, so that vulcanized sheets were obtained. Their physical properties were then measured.

The results are summarized in Table 5.

It is appreciated from Table 5 that high tensile strength and elongation can be exhibited when the molar ratio of methacrylic acid to zinc oxide falls within a range of from 1:0.5 to 1:3.2.

Table 5

| Run | | | Invention Example | | | | | Comp. Ex. |
|---|---|---|---|---|---|---|---|---|
| | | | 12 | 13 | 14 | 15 | 16 | 17 |
| Compounding formulation | Copolymer rubber (Rubber No. E) | | 100 | 100 | 100 | 100 | 100 | 100 |
| | Zinc oxide[1] | | 6 | 17 | 27 | 36 | 45 | 17 |
| | Methacrylic acid | | 12 | 23 | 13 | 24 | 15 | - |
| | Zinc oxide[4] / Methacrylic acid | | 0.53 | 78 | 2.20 | 1.59 | 3.17 | - |
| | Organic peroxide[3] | | 5 | 5 | 5 | 5 | 5 | 5 |
| Vulcanization conditions | Temperature, °C | | 180 | 180 | 180 | 180 | 180 | 180 |
| | Time, minutes | | 15 | 15 | 15 | 15 | 15 | 15 |
| Measurement data | Tensile strength, kg/cm² | | 515 | 512 | 521 | 555 | 416 | 68 |
| | Elongation, % | | 540 | 440 | 490 | 440 | 450 | 390 |
| | Hardness | | 63 | 65 | 68 | 82 | 72 | - |

1) Same as the corresponding footnote to Table 2.
2) Same as the corresponding footnote to Table 3.
3) Molar ratio.

Example 1

Using as zinc compounds those obtained by classifying the zinc compounds, which are shown in Table 3, in an air classifier and removing coarse particles of 20 μm or greater and the unclassified products and as a copolymer rubber the hydrogenated NBR (Rubber No. E), rubber compositions were prepared in accordance with the compounding recipes shown in Table 3, respectively. The rubber compositions were separately press-cured under the vulcanization conditions described in the same table, whereby vulcanizates were obtained. Their physical properties were thereafter measured.

The results are summarized in Table 3.

As is apparent from Table 3, removal of coarse particles of 20 $\mu$m or greater by classification of a zinc compound makes it possible to improve the tensile strength further.

Table 3

| Run No. | | Invention Examples | | Comparative Examples | |
|---|---|---|---|---|---|
| | | 1 | 2 | 3 | 4 |
| Copolymer rubber (Rubber No. E) | | 100 | 100 | 100 | 100 |
| Zinc compound | Kind | $ZnO^{1)}$ | $ZnCO_3{}^{5)}$ | $ZnO^{1)}$ | $ZnCO_3{}^{5)}$ |
| | Classification | Applied | Applied | Not Applied | Not Applied |
| | Content of coarse particles of 20 μm or greater, % | 0 | 0 | 36 | 21 |
| | Amount added | 16 | 30 | 16 | 30 |
| Methacrylic acid | | 24 | 24 | 24 | 24 |
| Organic peroxide[3] | | 4 | 4 | 4 | 4 |
| Vulcanization conditions | Temperature, °C | 180 | 180 | 180 | 180 |
| | Time, minutes | 15 | 15 | 15 | 15 |
| Measurement data | Tensile strength, $kg/cm^2$ | 545 | 573 | 447 | 542 |
| | Elongation, % | 430 | 430 | 440 | 430 |

1) Same as the corresponding footnote to Table 2.
3) α,α'-bis(tert-butylperoxy-m-isopropyl)benzene; purity: 40%.
5) Product of Seido Chemical Industry Co., Ltd.

Example 5

Using the hydrogenated NBR (Rubber No. E) described in Table 1, rubber compositions were prepared in accordance with the compounding recipes given in Table 7, respectively. The rubber compositions were

15

separately press-cured under the vulcanization conditions shown in Table 7 so that vulcanizates were obtained. Various properties required as rubbers for tire anti-slide devices were measured. The results are summarized in Table 7.

As is clearly envisaged from Table 7, it is understood that a vulcanizate obtained from a rubber composition of the present invention has low dynamic heat generation and undergoes very small hardness variations at high temperatures. Accordingly, when the rubber composition is used as tire anti-slide devices, the tire anti-slide devices will not be easily softened by heat generated during running so that they will not be broken.

Table 7

| | | Invention Example | Comp. Example |
|---|---|---|---|
| Run No. | | 22 | 23 |
| Compounding recipe | Copolymer rubber (Rubber No. E) | 100 | 100 |
| | Zinc oxide[1] | 15 | - |
| | Methacrylic acid | 15 | - |
| | Organic peroxide[3] | 5 | 5 |
| | Carbon black | - | 20 |
| Vulcanization conditions | Temperature, °C | 180 | 180 |
| | Time, minutes | 20 | 20 |
| Measured values | Tensile strength, kg/cm$^2$ | 536 | 305 |
| | Elongation, % | 460 | 360 |
| | Hardness | 71 | 71 |
| | Impact resilience,% | 62 | 60 |
| Mooney viscosity | | 69 | 73 |
| Dynamic heat generation, °C | | 18 | 26 |
| High-temp. physical property (130°C) | Tensile strength, kg/cm$^2$ | 102 | 50 |
| | Elongation, % | 240 | 110 |
| | Hardness | 71 | 71 |

1) Same as the corresponding footnote to Table 2.
3) Same as the corresponding footnote to Table 3.

Example 2

Rubber compositions were prepared by adding the zinc methacrylate (Zn-MA) and the organic peroxide, which are described in Table 2 and Table 3 respectively, to hydrogenated NBR ("Zetpol 2020", trade name; product of Nippon Zeon Co., Ltd.; hydrogenation degree: 90%; bound acrylonitrile content: 37%; conjugated diene unit content: 6.3%) in accordance with the compounding recipes described in Table 4. The rubber compositions were separately press-cured under the vulcanization conditions given in Table 4, whereby vulcanized sheets of 2 mm thick were obtained, respectively. Their physical properties were then measured.

The results are shown in Table 4.

As is apparent from Table 4, it is understood that the tensile strength can be enhanced further by the use of zinc methacrylate, in which the content of coarse particles of 20 $\mu$m or greater has been controlled to 5 wt.% or less by classification (Run Nos. 5-8), compared with the use of zinc methacrylate having a higher content of such coarse particles.

16

EP 0 420 449 B1

Example 3

Using the zinc methacrylate (No. 2) described in Table 2, rubber compositions were prepared in accordance with the compounding recipes described in Table 5, respectively. The rubber compositions

## Table 4

| | | Invention Example | | | | Comparative Example |
|---|---|---|---|---|---|---|
| Run No. | | 5 | 6 | 7 | 8 | 9 |
| Hydrogenated NBR[6] | | 100 | 100 | 100 | 100 | 100 |
| Zn-MA | Code No. | 1 | 2 | 3 | 4 | 2 |
| | Classification | Applied | Applied | Applied | Applied | Not Applied |
| | Amount added | 40 | 40 | 40 | 40 | 40 |
| Organic peroxide[3] | | 5 | 5 | 5 | 5 | 5 |
| Vulcani- zation conditions | Temperature, °C | 180 | 180 | 180 | 180 | 180 |
| | Time, minutes | 20 | 20 | 20 | 20 | 20 |
| Measure- ment data | Tensile strength, kg/cm$^2$ | 520 | 547 | 472 | 416 | 390 |
| | Elongation, % | 510 | 510 | 480 | 460 | 430 |

3) Same as the corresponding footnote to Table 3.
6) "Zetpol 2020", trade name; product of Nippon Zeon Co., Ltd.; Hydrogenation degree: 90%. Bound acrylonitrile content: 37%

were press-cured under the vulcanization conditions described in Table 5, whereby vulcanized sheets of 2 mm thick were obtained, respectively. Their physical properties were then measured.

It is understood from the foregoing results that the vulcanizable rubber compositions of the present invention have very high strength, especially at low temperatures, and excellent elongation, abrasion resistance and 100% tensile stress and are hence extremely suited as rubber compositions for tire anti-slide devices.

In contrast, use of SBR or BR (Run Nos. 10-11) leads to low strength and elongation characteristics and also to insufficient abrasion resistance.

Table 5

| | | | Invention Example | | | Comparative Example | |
|---|---|---|---|---|---|---|---|
| Run No. | | | 10 | 11 | 12 | 13 | 14 |
| Hydrogenated NBR[6] | | | 100 | 100 | 100 | - | - |
| SBR[2] | | | - | - | - | 100 | - |
| BR[7] | | | - | - | - | - | 100 |
| Zn-MA (No. 2 classified product) | | | 30 | 60 | 80 | 40 | 40 |
| Organic peroxide[3] | | | 5 | 5 | 5 | 0.3 | 0.3 |
| Vulcanization conditions | Temperature, °C | | 170 | 170 | 170 | 170 | 170 |
| | Time, minutes | | 20 | 20 | 20 | 20 | 20 |
| Tensile strength, kg/cm$^2$ | 0°C | | 647 | 594 | 532 | 210 | 180 |
| | Room temperature | | 533 | 470 | 390 | 198 | 160 |
| Elongation, % | 0°C | | 410 | 360 | 260 | 200 | 195 |
| | Room temperature | | 510 | 450 | 320 | 240 | 224 |
| Picot abrasion, cc (at room tempature) | | | 0.009 | 0.004 | 0.005 | 0.05 | 0.07 |
| 100% Tensile stress, kg/cm$^2$ (at room temperature) | | | 55 | 155 | 254 | 79 | 87 |

3) Same as the corresponding footnote to Table 3.
6) Same as the corresponding footnote to Table 4
7) "Nipol BR1220", trade name; polybutadiene produced by Nippon Zeon Co., Ltd.
2) "Nipol 1502", trade name for SBR produced by Nippon Zeon Co., Ltd.

Example 4

In accordance with the compounding recipes of Table 6, rubber compositions containing silica were prepared, respectively. The rubber compositions were press-cured under the vulcanization conditions described in the same table. Their physical properties were measured. The results are shown in the same table.

It is understood as apparent from Table 6 that the 100% tensile stress is improved by the addition of silica to each rubber composition of the present invention. Further, the abrasion resistance is also improved.

Table 6

| | | Invention Example | |
|---|---|---|---|
| Run No. | | 15 | 16 |
| Hydrogenated NBR[6] | | 100 | 100 |
| Zn-MA (No. 2 classified product) | | 30 | 30 |
| Silica[8] | | 10 | 20 |
| Organic peroxide[8] | | 5 | 5 |
| Vulcanization conditions | Temperature, °C | 170 | 170 |
| | Time, minutes | 10 | 10 |
| Tensile strength, $kg/cm^2$ | Room temperature | 453 | 412 |
| | 10°C | 532 | 510 |
| Elongation, % | Room temperature | 420 | 380 |
| | 10°C | 380 | 350 |
| 100% Tensile stress, $kg/cm^2$ | | 67 | 96 |
| Picot abrasion, cc | | 0.0037 | 0.0031 |

3) Same as the corresponding footnote to Table 3.
6) Same as the corresponding footnote to Table 4.
8) "Aerosil 200", trade name; product of Nippon Aerosil Co., Ltd.

Example 5

As shown in Table 7, rubber compositions were prepared in accordance with the pale-tinted compounding recipes. The rubber compositions added with the blue or red pigment alone gave translucent vulcanizates. On the other hand, those added with the blue or red pigment in combination with titanium oxide gave opaque vulcanizates of the corresponding vivid colors.

As is apparent from Table 7, it is understood that the physical properties remain substantially unchanged even when various pigments are added.

Table 7

| | | Invention Example | | | |
|---|---|---|---|---|---|
| Run No. | | 17 | 18 | 19 | 20 |
| Hydrogenated NBR[6] | | 100 | 100 | 100 | 100 |
| Zn-MA (No. 2 classified product) | | 30 | 30 | 30 | 30 |
| Organic peroxide[3] | | 2 | 2 | 2 | 2 |
| Blue pigment (cobalt blue) | | 1 | - | 1 | - |
| Red pigment (cadmium red) | | - | 1 | - | 1 |
| White pigment (titanium oxide) | | - | - | 2 | 2 |
| Vulcanization conditions | Temperature, °C | 70 | 70 | 70 | 70 |
| | Time, minutes | 10 | 10 | 10 | 10 |
| Measurement data | Tensile strength, kg/cm$^2$ | 532 | 512 | 507 | 478 |
| | Elongation, % | 450 | 50 | 440 | 430 |

3) Same as the corresponding footnote to Table 3.
6) Same as the corresponding footnote to Table 4

Example 6

The rubber compositions of Run Nos. 2, 5 and 11 were separately molded and cured, to create tire anti-slide devices in the form of a net-like belt (thickness: 6 mm; without core material) were produced. They were mounted on tires, and an actual running test conducted on dry pavement. They showed excellent performance, remaining free of damages and retaining an extremely good level of abrasion resistance and strength, even after 5,000 km running.

Example 7

Using the various rubbers shown in Table 8, vulcanizable rubber compositions were prepared in accordance with the compounding recipes described in Table 8, respectively. The rubber compositions were press-cured under the vulcanization conditions also given in Table 8, and the physical properties of the resultant vulcanizates were measured. Zinc oxide was used after the content of coarse particles of 20 μm or greater was reduced to 0 wt.% by classification.

The results are summarized in Table 8.

Table 8

| | Run No. | Invention. Ex. 21 | Invention. Ex. 22 | Comparative Example 23 | Comparative Example 24 | Comparative Example 25 | Comparative Example 26 | Comparative Example 27 | Comparative Example 28 |
|---|---|---|---|---|---|---|---|---|---|
| Compounding recipe | Hydrogenated NBR[6] | 100 | 100 | - | - | - | 100 | 100 | 100 |
| | Natural rubber | - | - | 100 | 100 | - | - | - | - |
| | NBR[9] | - | - | - | - | 100 | - | - | - |
| | Zinc oxide[1] | 20 | 20 | 5 | 5 | 20 | - | - | - |
| | Methacrylic acid | 30 | 35 | - | - | 30 | - | - | - |
| | Stearic acid | - | - | 2 | 2 | - | - | - | - |
| | Zinc acrylate | - | - | - | - | - | - | - | 34 |
| | Calcium methacrylate | - | - | - | - | - | 36 | - | - |
| | Magnesium methacrylate | - | - | - | - | - | - | 38 | - |
| | Organic peroxide[3] | 1 | 5 | - | - | 5 | 5 | 5 | 5 |
| | HAF carbon black | - | - | 45 | 70 | - | - | - | - |
| | Aromatic oil | - | - | 10 | 10 | - | - | - | - |
| | Sulfur | - | - | 2.5 | 2.5 | - | - | - | - |
| | Accelerator, MSA | - | - | 1 | 1 | - | - | - | - |
| Vulcanization conditions | Temperature, °C | 170 | 170 | 150 | 150 | 170 | 170 | 170 | 170 |
| | Time, minutes | 20 | 20 | 15 | 15 | 20 | 20 | 20 | 20 |
| Measurement data | Tensile strength, kg/cm² | 548 | 582 | 290 | 250 | 320 | 285 | 250 | 298 |
| | Elongation, % | 410 | 390 | 540 | 350 | 130 | 340 | 310 | 320 |
| | Hardness | 86 | 88 | 61 | 72 | 93 | 75 | 77 | 80 |
| | 100% Tensile stress, kg/cm² | 106 | 142 | 28 | 51 | 257 | 61 | 67 | 71 |

1) Same as the corresponding footnote to Table 2 (except that a classified product was used).
3) Same as the corresponding footnote to Table 3.
6) Same as the corresponding footnote to Table 3.
9) "Nipole DN101", trade name; product of Nippon Zeon Co., Ltd.; bound acrylonitrile content: about 42%.

It is understood from Table 8 that the rubber compositions of the present invention (Run Nos. 21-22) have excellent strength and elongation characteristics, hardness and 100% tensile stress. In contrast, the rubber compositions using natural rubber or NBR (Run Nos. 23-25) are insufficient in the strength and elongation characteristics. When the metal salts of the ethylenically-unsaturated carboxylic acids other than zinc methacrylate were incorporated (Run Nos. 26-28), the strength and elongation characteristics were insufficient despite of the use of hydrogenated NBR as a copolymer rubber.

Example 8

Using the rubber compositions prepared in Example 7 (Run Nos. 21-28 in Table 8), tire anti-slide devices of a net-like structure were produced on a trial basis. The net-like structure was similar to the structure of Qualification No. 62-004A shown in "Listing of Qualified Products of Non-Metallic or Cable-Type Tire Anti-Slide Devices" which was prepared by Tire Anti-Slide Device Qualification Committee of Japan Automobile Traffic Safety Goods Manufacturers Association. None of those tire anti-slide devices used any

EP 0 420 449 B1

core material. In addition, a tire anti-slide device with a core material was also produced using the rubber composition of Run No. 23 and a nylon net as a core material. The thickness of all the above tire anti-slide devices was 6 mm.

A dry-pavement running was conducted using the tire anti-slide devices produced on the trial basis.
Running conditions:     Speed - 50 kg/hr
                        Vehicle - TOYOTA CORONA (1,800 cc)
The results of the running test are summarized in Table 9.

It is understood from the results of Table 9 that tire anti-slide devices obtained from each rubber composition of the present invention have excellent characteristics.

TABLE 9

| | Rubber composition | Results of running test |
|---|---|---|
| Invention Example | Run No. 21 | Normal after 5,000 km running. Abrasion wear: 1.5 mm. |
| | Run No. 22 | Normal after 5,000 km running. Abrasion wear: 1.2 mm. |
| Comparative Example | Run No. 23 | Damaged within 100 km. Substantially unabraded, so that centrifugal bulging is gathered to be responsible to the damages. |
| | Run No. 23 | Nylon net was used as a core material. Damaged at 1,500 km. Abrasion wear: 4 mm. |
| | Run No. 24 | Damaged at 530 km. Abrasion wear: 4 mm. |
| | Run No. 25 | Damaged at 760 km. Abrasion wear: 2.3 mm. |
| | Run No. 26 | Damaged at 950 km. Abrasion wear: 2.3 mm. |
| | Run No. 27 | Damaged at 1,000 km. Abrasion wear: 2.5 mm. |
| | Run No. 28 | Damaged at 1,000 km. Abrasion wear: 2.5 mm. |

**Claims**

1. A rubber composition for tire anti-slide devices, comprising:
    100 parts by weight of a copolymer rubber derived at least from an ethylenically-unsaturated nitrile and a conjugated diene and having a conjugated diene unit content in the polymer chain of not more than 30 wt.%;
    10-100 parts by weight of zinc methacrylate in the form of particles of which no more than 5 wt.% is 20 μm or more in size; and
    0.2-10 parts by weight of an organic peroxide.

22

**2.** The composition of claim 1, wherein the copolymer rubber is a copolymer rubber which has resulted from hydrogenation of conjugated diene units of a copolymer rubber derived from an ethylenically-unsaturated nitrile and a conjugated diene and having an ethylenically-unsaturated nitrile unit content of 20-60 wt.%.

**3.** The composition of claim 1, wherein the copolymer rubber is a copolymer rubber resulting from an ethylenically-unsaturated nitrile, a conjugated diene and a further copolymerizable monomer and having an ethylenically-unsaturated nitrile unit content of 20-60 wt.%.

**4.** The composition of claim 1, wherein the copolymer rubber is a copolymer rubber which has resulted from hydrogenation of conjugated diene units of a copolymer rubber derived from an ethylenically-unsaturated nitrile, a conjugated diene and a further copolymerizable monomer and having an ethylenically-unsaturated nitrile unit content of 20-60 wt.%.

**5.** The composition of any one of claims 1-4, wherein said zinc methacrylate is a product obtained by reacting methacrylic acid and a zinc compound at a molar ratio in a range of from 1:0.5 to 1:3.2.

**6.** The composition of 5, wherein the content of said zinc methacrylate is such that the amount of the methacrylic acid is 15-50 parts by weight per 100 parts by weight of said copolymer rubber.

**7.** The composition of any one of claims 1-5, wherein said zinc methacrylate has been produced *in situ* in said copolymer rubber by a reaction of methacrylic acid and a zinc compound added to said copolymer rubber.

**8.** The composition of claim 7 when appendant to claim 5, wherein the amount of the methacrylic acid is 10 to 50 parts by weight per 100 parts by weight of said copolymer rubber.

**9.** The composition of any one of claims 1-8, further comprising silica.

**10.** The composition of any one of claims 1-9, further comprising a colorant.

**11.** The composition of any one of claims 1-10, which is vulcanisable to provide a vulcanizate having a 100% tensile stress of at least 50 kg/cm$^2$.

**12.** An anti-slide device for a tire, which has been produced by molding and curing the composition of any one of claims 1-11.

**13.** The anti-slide device of claim 12, which has been molded and cured without using any core material.

**Patentansprüche**

**1.** Kautschuk-Zusammensetzung für Reifen-Antirutsch-Vorrichtungen, umfassend:
100 Gewichtsteile eines mindestens von einem ethylenisch ungesättigten Nitril und einem konjugierten Dien abgeleiteten Copolymer-Kautschuks mit einem Gehalt an konjugierter Dien-Einheit in der Polymerkette von nicht mehr als 30 Gew.-%;
10 - 100 Gewichtsteile Zinkmethacrylat in Form von Teilchen, von denen nicht mehr als 5 Gew.-% eine Größe von 20 $\mu$m oder mehr aufweisen; und
0,2 - 10 Gewichtsteile eines organischen Peroxids.

**2.** Zusammensetzung nach Anspruch 1, in welcher der Copolymer-Kautschuk ein Copolymer-Kautschuk ist, der resultierte aus der Hydrierung von konjugierten Dien-Einheiten eines von einem ethylenisch ungesättigten Nitril und einem konjugierten Dien abgeleiteten Copolymer-Kautschuks mit einem Gehalt an ethylenisch ungesättigter Nitril-Einheit von 20 - 60 Gew.-%.

**3.** Zusammensetzung nach Anspruch 1, in welcher der Copolymer-Kautschuk ein Copolymer-Kautschuk ist, der resultiert aus einem ethylenisch ungesättigten Nitril, einem konjugierten Dien und einem weiteren copolymerisierbaren Monomeren und einen Gehalt an ethylenisch ungesättigter Nitril-Einheit von 20 - 60 Gew.-% aufweist.

**4.** Zusammensetzung nach Anspruch 1, in welcher der Copolymer-Kautschuk ein Copolymer-Kautschuk ist, der resultierte aus der Hydrierung von konjugierten Dien-Einheiten eines Copolymer-Kautschuks, der von einem ethylenisch ungesättigten Nitril, einem konjugierten Dien und einem weiteren copolymerisierbaren Monomeren abgeleitet ist und einen Gehalt an ethylenisch ungesättigter Nitril-Einheit von 20 - 60 Gew.-% aufweist.

**5.** Zusammensetzung nach irgendeinem der Ansprüche 1 - 4, in welcher das Zinkmethacrylat ein Produkt ist, das durch Umsetzung von Methacrylsäure und einer Zinkverbindung in einem Molverhältnis im Bereich von 1:0,5 bis 1:3,2 erhalten wurde.

**6.** Zusammensetzung nach Anspruch 5, in welcher der Gehalt an Zinkmethacrylat so ist, daß die Menge an Methacrylsäure 15 - 50 Gewichtsteile pro 100 Gewichtsteile des Copolymer-Kautschuks beträgt.

**7.** Zusammensetzung nach irgendeinem der Ansprüche 1 - 5, in welcher das Zinkmethacrylat in dem Copolymer-Kautschuk durch Umsetzung von Methacrylsäure und einer Zinkverbindung, die dem Copolymer-Kautschuk zugegeben wurden, in situ erzeugt wurde.

**8.** Zusammensetzung nach Anspruch 7, wenn von Anspruch 5 abhängig, in welcher die Menge an Methacrylsäure 10 bis 50 Gewichtsteile pro 100 Gewichtsteile des Copolymer-Kautschuks beträgt.

**9.** Zusammensetzung nach irgendeinem der Ansprüche 1 - 8, weiter Siliciumdioxid umfassend.

**10.** Zusammensetzung nach irgendeinem der Ansprüche 1 bis 9, weiter ein Färbemittel umfassend.

**11.** Zusammensetzung nach irgendeinem der Ansprüche 1 bis 10, die vulkanisierbar ist, um ein Vulkanisat mit einer 100%-Zugspannung von mindestens 50 kg/cm$^2$ zu liefern.

**12.** Antirutsch-Vorrichtung für einen Reifen, die durch Formgeben und Vulkanisieren der Zusammensetzung nach irgendeinem der Ansprüche 1 - 11 hergestellt wurde.

**13.** Antirutsch-Vorrichtung nach Anspruch 12, die ohne Verwendung irgendeines Kernmaterials geformt und vulkanisiert wurde.

**Revendications**

**1.** Composition de caoutchouc pour dispositifs ou systèmes antidérapage de pneumatiques, la composition comprenant :

100 parties en poids d'un caoutchouc de copolymère consistant en au moins un nitrile à insaturation éthylénique et en un diène conjugué et ayant une teneur, dans la chaîne polymère, en des motifs diènes conjugués non supérieure à 30 % en poids ;

10 à 100 parties en poids de méthacrylate de zinc sous forme de particules dont pas plus de 5 % en poids ont une taille égale ou supérieure à 20 $\mu$m ; et

0,2 à 10 parties en poids d'un peroxyde organique.

**2.** Composition selon la revendication 1, dans laquelle le caoutchouc de copolymère est un caoutchouc de copolymère provenant de l'hydrogénation des motifs diènes conjugués d'un caoutchouc de copolymère consistant en un nitrile à insaturation éthylénique et en un diène conjugué et ayant une teneur en des motifs nitriles à insaturation éthylénique de 20 à 60 % en poids.

**3.** Composition selon la revendication 1, dans laquelle le caoutchouc de copolymère est un caoutchouc de copolymère résultant d'un nitrile à insaturation éthylénique, d'un diène conjugué et d'un autre monomère copolymérisable et ayant une teneur en des motifs nitriles à insaturation éthylénique de 20 à 60 % en poids.

**4.** Composition selon la revendication 1, dans laquelle le caoutchouc de copolymère est un caoutchouc de copolymère provenant de l'hydrogénation des motifs diènes conjugués d'un caoutchouc de copolymère provenant d'un nitrile à insaturation éthylénique, d'un diène conjugué et d'un autre monomère copolymérisable et ayant une teneur en des motifs nitriles à insaturation éthylénique de 20 à 60 % en poids.

5. Composition selon l'une quelconque des revendications 1 à 4, dans laquelle ledit méthacrylate de zinc est un produit obtenu par la réaction de l'acide méthacrylique et d'un composé du zinc selon un rapport molaire compris entre 1 : 0,5 et 1 : 3,2.

6. Composition selon la revendication 5, dans laquelle la teneur en ledit méthacrylate de zinc est telle que la quantité de l'acide méthacrylique est de 15 à 50 parties en poids pour 100 parties en poids dudit caoutchouc de copolymère.

7. Composition selon l'une quelconque des revendications 1 à 5, dans laquelle ledit méthacrylate de zinc a été produit sur place ("in situ") dans ledit caoutchouc de copolymère par une réaction de l'acide méthacrylique et d'un composé du zinc ajouté audit caoutchouc de copolymère.

8. Composition selon la revendication 7 prise avec la revendication 5, dans laquelle la quantité de l'acide méthacrylique est de 10 à 50 parties en poids pour 100 parties en poids dudit caoutchouc de copolymère.

9. Composition selon l'une quelconque des revendications 1 à 8, comprenant en outre de la silice.

10. Composition selon l'une quelconque des revendications 1 à 9, comprenant en outre un colorant.

11. Composition selon l'une quelconque des revendications 1 à 10, qui est vulcanisable pour donner un vulcanisat pour lequel une contrainte provoquant 100 % de déformation par traction vaut au moins 50 kg/cm$^2$.

12. Dispositif antidérapage pour pneumatiques, qui a été produit par moulage et vulcanisation de la composition selon l'une quelconque des revendications 1 à 11.

13. Dispositif antidérapage selon la revendication 12, qui a été moulé et vulcanisé sans utilisation d'une matière centrale de noyau quelconque.